# EUROPEAN PATENT SPECIFICATION

(11) **EP 3 994 383 B1**
(45) Date of publication and mention of the grant of the patent: **14.08.2024**
(21) Application number: 20737614.6
(22) Date of filing: 02.07.2020
(51) Int. Cl.: F16L 23/028, F16L 23/032, F16L 23/036, F16L 37/12

(54) **COUPLING ARRANGEMENT FOR COUPLING CYLINDRICAL FLUID CONDUIT SECTIONS**
KUPPLUNGSANORDNUNG ZUM VERBINDEN ZYLINDRISCHER FLUIDLEITUNGSABSCHNITTE
DISPOSITIF DE COUPLAGE POUR COUPLER DES SECTIONS DE CONDUIT DE FLUIDE CYLINDRIQUE

(30) Priority: 02.07.2019 NL 2023424
(43) Date of publication of application: 11.05.2022
(73) Proprietor: B.B.A. Participaties B.V., 7382 AJ Klarenbeek (NL)
(72) Inventor: BRUIN, Johannes, 7382 AJ Klarenbeek (NL)
(74) Representative: Geurts, Franciscus Antonius
(86) International application number: PCT/NL2020/050436
(87) International publication number: WO 2021/002751

(56) References cited:
- EP-A2- 0 523 518
- US-A- 3 515 416
- US-A- 3 895 833
- US-A- 4 142 740
- US-A1- 2019 128 456

## Description

### BACKGROUND OF THE INVENTION

The invention relates to a coupling arrangement for coupling a first cylindrical conduit section of a fluid conduit to a second cylindrical conduit section of that fluid conduit, comprising a ring that is to be mounted to a pair of opposite pivot points on the first conduit section around that first conduit section, which ring at a pair of opposite locations comprises a pedestal for the attachment thereto of a clamping organ cooperating with the second conduit section.

Such a coupling arrangement is known, and is for example applied as a quick coupling that is permanently mounted to a straight or an L-shaped conduit section. The ring of the known coupling arrangement is for example made out of a metal ring that comprises two opposite inward facing stumps that correspond with two opposite metal U-shaped receiving elements on the conduit section.

When mounting the ring around the conduit section, the stumps are slid into the U-shaped receiving elements, after which the ring is secured by squeezing together the legs of the U-shapes. Subsequently the conduit section with the quick coupling is galvanized, and the clamping organs, for instance a claw and a claw with an operating lever, are attached to the ring.

US 4,142,740 discloses a coupling arrangement for coupling a first conduit section to a second conduit section according to the preamble of claim 1.

### SUMMARY OF THE INVENTION

The known coupling arrangement has the drawback that the production thereof is labor intensive, and that the attachment thereof to a conduit section is physically very demanding.

It is an object of the present invention to provide a coupling arrangement that can be produced in a quick and straightforward manner, and that can be attached to a conduit section in an ergonomically sound manner.

This object is achieved, and other benefits are obtained, with a coupling arrangement for coupling a cylindrical first conduit section with a cylindrical second conduit section, wherein the coupling arrangement comprises the first conduit section, a pair opposite receiving ribs that extend radially outwards from the first conduit section and that are circumferentially closed, and a ring that is to be mounted around the first conduit section, which ring at a pair of opposite locations comprises a pedestal for the attachment thereto of a clamping organ that cooperates with the second conduit section, wherein the ring comprises a pair of opposite cams that extend radially inwards with respect to the ring to be received in the respective receiving ribs, wherein the respective cams with the respective receiving ribs form respective opposite pivot points between the first conduit section and the ring, wherein the ring is composed of two composable ring sections that each comprise one cam, wherein each cam, prior to composing the ring, is independently receivable in a respective receiving rib on the first conduit section, and wherein the ring is composable by rotating the respective ring sections around the respective pivot points.

By first mounting the ring sections with the cams in the receiving ribs and subsequently composing the rings, the number of manipulations with a relatively heavy conduit section is reduced.

In an embodiment the ring sections are each at a first end provided with a latch that tangentially extends with respect to the respective pivot point and are at a second end provided with a receiving slot that tangentially extends with respect to the respective pivot point, wherein the latch of a first ring section by a rotation of that ring section around a first pivot point is receivable in the receiving slot of a second ring section, and simultaneously the latch of the second ring section by a rotation of that ring section around a second pivot point is receivable in the receiving slot of the first ring section.

The ring sections for example comprise securing means for securing in a state wherein the latch of the first respectively the second ring section is received in the receiving slot of the second respectively the first ring section, or by gluing are securable in a state wherein the latch of the first respectively the second ring section is received in the receiving slot of the second respectively the first ring section.

In an advantageous embodiment the composable ring sections are identical.

The advantages of a ring that is composed of identical ring sections are particularly reflected in an embodiment in which said ring sections are manufactured according to an injection molding process.

The ring section may for instance be manufactured from aluminum or from a plastic material, which offers the advantage that therewith a ring can be composed that is considerably lighter than a steel ring according to the prior art.

In a subsequent embodiment the ring sections are manufactured from cast steel.

In yet another embodiment the ring sections are manufactured according to a method for 3D printing.

In a coupling arrangement according to the invention for example at least one clamping organ is composed of a clamping member that cooperates with the second conduit section, and an operating lever, by use of which the first and the second conduit section are to be coupled quick and easy.

In an embodiment the cam, for example in a cross-section, has a longitudinal circumference with an arch-shaped first short side and a wedge-shape opposite thereto.

A cam having such a shape offers the advantage that the coupling arrangement during coupling of the two conduit sections is easily maneuverable, while in coupled state it can be relatively heavily loaded.

### BRIEF DESCRIPTION OF THE DRAWINGS

The invention will be elucidated hereinbelow on the basis of exemplary embodiments, with reference to the drawings.

In the drawings show:
Figure 1 in perspective view an embodiment of a ring section for a coupling arrangement according to the invention, as seen on the inner side that is to be faced towards the first conduit section of the fluid conduit,
Figure 2 in perspective view the ring section as shown in figure 1, seen at the outer side,
Figure 3 in perspective view a ring that is composed of two ring sections according to figure 1,
Figure 4 in perspective view a ring as shown in figure 3, comprising clamping organs and mounted around a first embodiment of the first conduit section,
Figure 5 in perspective view the first ring section as shown in figure 1, mounted to the first conduit section,
Figure 6 in perspective view the first conduit section with the first ring section as shown in figure 5 and a second ring section as shown in figure 1, in a state in which the ring sections are being composed,
Figure 7 in a section through a perspective image a detail of the first conduit section with the ring sections as shown in figure 6, seen from a different angle,
Figure 8 in perspective view an embodiment of a first conduit section that is to be coupled, and
Figure 9 in perspective view a second exemplary embodiment of a ring that is composed of two identical ring sections.

### DETAILED DESCRIPTION OF THE INVENTION

In the figures corresponding parts are indicated by the same reference numbers.

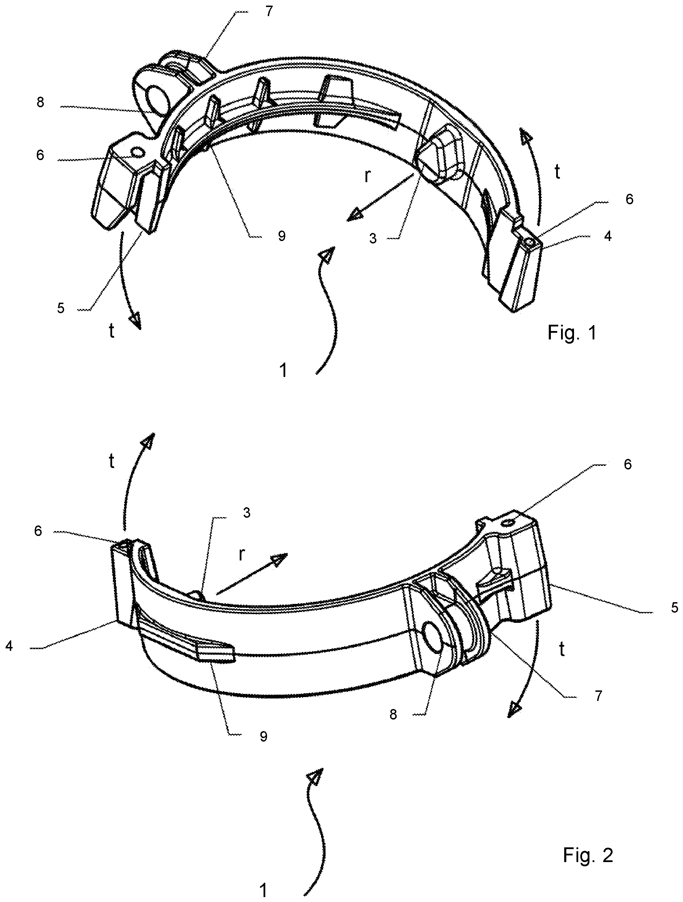

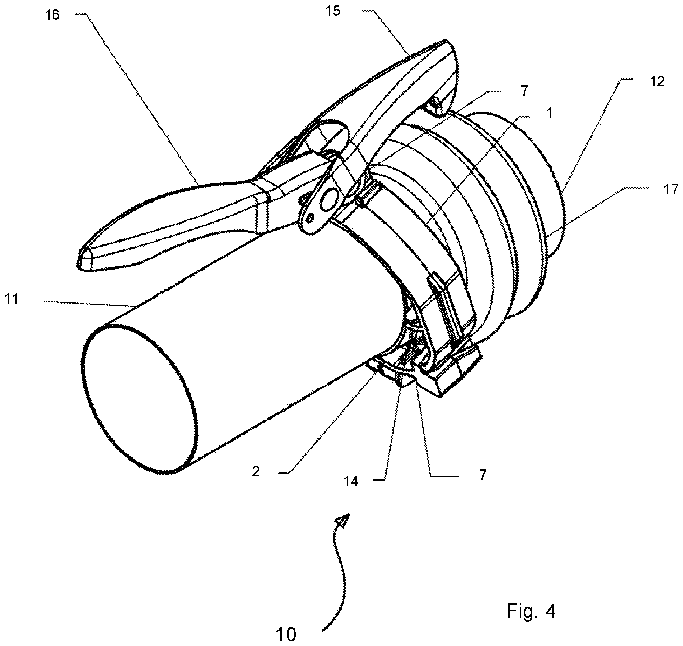

Figure 1 shows a first ring section 1 that is part of a coupling arrangement 10 for coupling a cylindrical first conduit section 11 and a cylindrical second conduit section 12 of a fluid conduit, which are discussed below. The first ring section 1 is formed by a half ring that has, at its inner side, a cam 3 that extends radially inwards, in direction r, and that in a cross-section has a longitudinal circumference with an arch-shaped first short side and a wedge-shape opposite thereto. The cam 3 is designed to be mounted in clamping part or receiving rib 14 of a conduit section, that is shown in more detail in figures 4-8, to form together with the receiving rib 14 a first pivot point for the first ring section 1. This pivot has a rotation axis D transverse to the centerline of the first conduit section 11. The first ring section 1 comprises at a first end a latch 4 that tangentially, in direction t, extends with respect to the pivot point, and therewith with respect to the cam 3, and at a second end a receiving slot 5 that tangentially, in direction t, extends with respect to the respective pivot point. The positioning and shape of the hatch 4 and the receiving slot 5 are chosen such that the hatch 4 of the first ring section 1 by a rotation of the first ring section 1 around the first pivot point is receivable in a receiving slot 5 of a second ring section 2, that is shown in figure 2, and simultaneously a latch 4 of the second ring section 2 by a rotation of that second ring section 2 around a second pivot point is receivable in the receiving slot 5 of the first ring section 1. The latch 4 and the slot 5 comprise corresponding bores 6 for receiving a bolt, to, in the coupled state, secure the first ring section 1 with the corresponding second ring section 2. Figure 1 furthermore shows at the outer side of the first ring section 1 a pedestal 7 having a bore 8 for attaching thereto a clamping organ, and at the inner side and the outer side a reinforcement rib 9.

Figure 2 shows the first ring section 1 as shown in figure 1, seen from the outer side. As a result of the positioning and dimensions of the latch 4 and the receiving slot 5 as described above, the first ring section 1 can be composed with a second identical piece to a ring of which the first ring section 1 is identical to the second ring section 2.

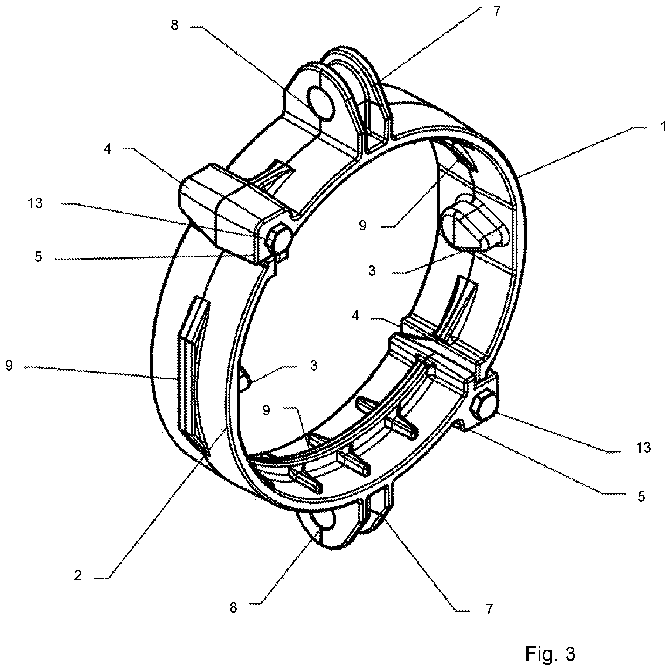

Figure 3 shows ring that is composed of the two identical ring sections 1, 2, wherein the ring sections 1, 2 are secured by bolts 13.

Figure 4 shows the fluid conduit with the cylindrical first conduit section 11, the cylindrical second conduit section 12, and the coupling arrangement 10 for coupling the first conduit section 11 to the second conduit section 12. The coupling arrangement 10 comprises the identical ring sections 1, 2, of which the respective cams 3, which are not visible, are each mounted in respective metal clamping members or receiving ribs 14 that are welded to a first conduit section 11 and that are squeezed together around the respective cam 3 and that thus with the respective cams 3 form the respective pivot points. Claws 15 are attached to the pedestals 7 at the ring 1, 2, of which one comprises an operating lever 16, for engagement behind a circumferential edge 17 around a second conduit section 12.

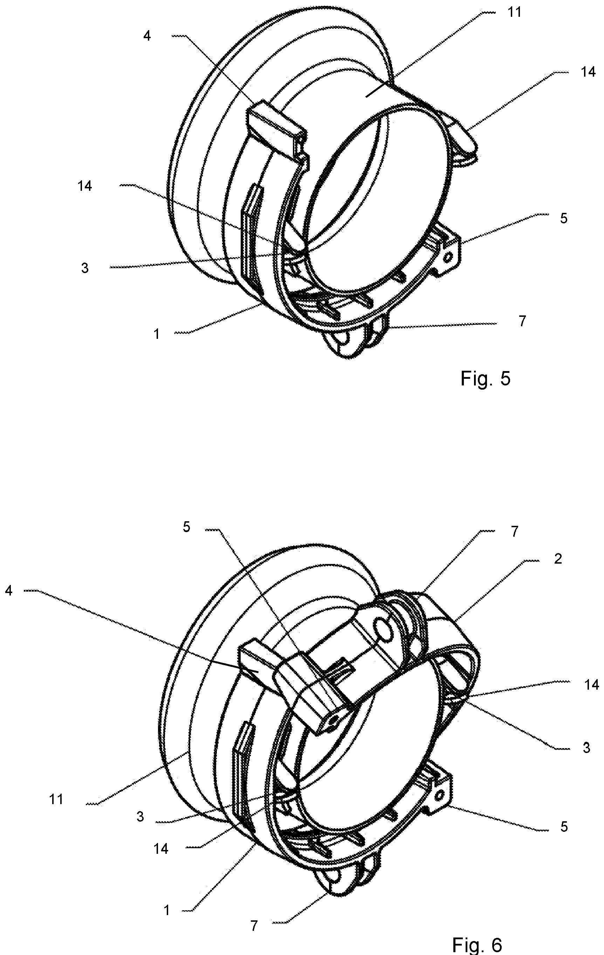

Figure 5 shows the first conduit section 11 having two clamping members 14, in one of which the first ring section 1 with the cam 3 is attached.

Figure 6 shows the first conduit section 11 of figure 5, in a state in which the second ring section 2 with its cam 3 is mounted in the second receiving rib 14, wherein the first ring section 1 and the second ring section 2 are rotated towards each other such that the latch 4 of the first ring section 1 is located right in front of the receiving slot 5 of the second ring section, and the latch 4 of the second ring section 2 is located right in front of the receiving slot 5 of the first ring section 1.

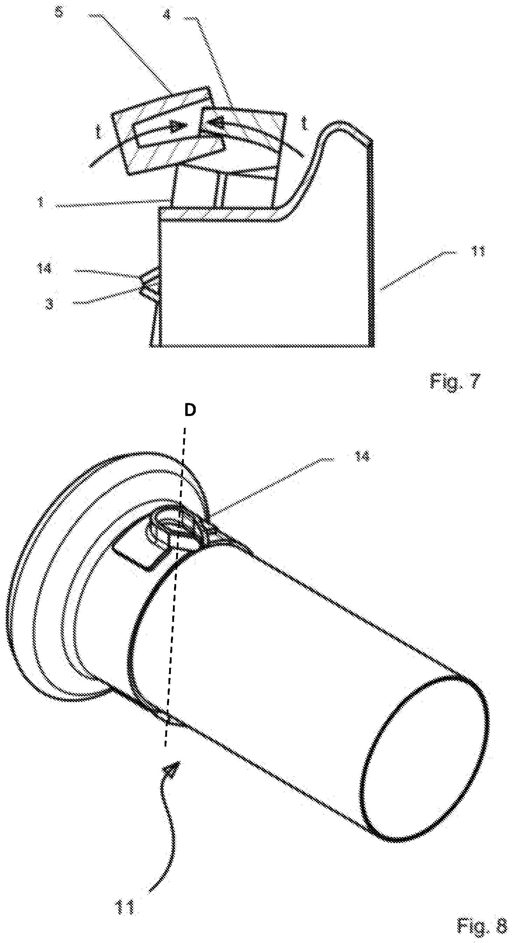

Figure 7 shows a detail of figure 6, with the first conduit section 11 with receiving rib 14, the first ring section 1 with latch 4, and the receiving slot 5 of the second ring section 2. It is shown how the in the shown situation lower side of the latch 4 and the upper side of the receiving slot 5 that corresponds thereto extend tangentially in direction t with respect to the receiving rib 14, that together with the cam 3 forms the pivot point, in such a way that the latch 4 of the first ring section 1 by a rotation of that first ring section 1 around the pivot point can be received in the receiving slot 5 of the second ring section 2.

Figure 8 shows the first conduit section 11 for a cylindrical fluid conduit, that at two opposite locations comprises the clamping member or receiving rib 14 that extends radially outwards and that are circumferentially closed, for receiving therein the cam 3 of the above described coupling arrangement 10.

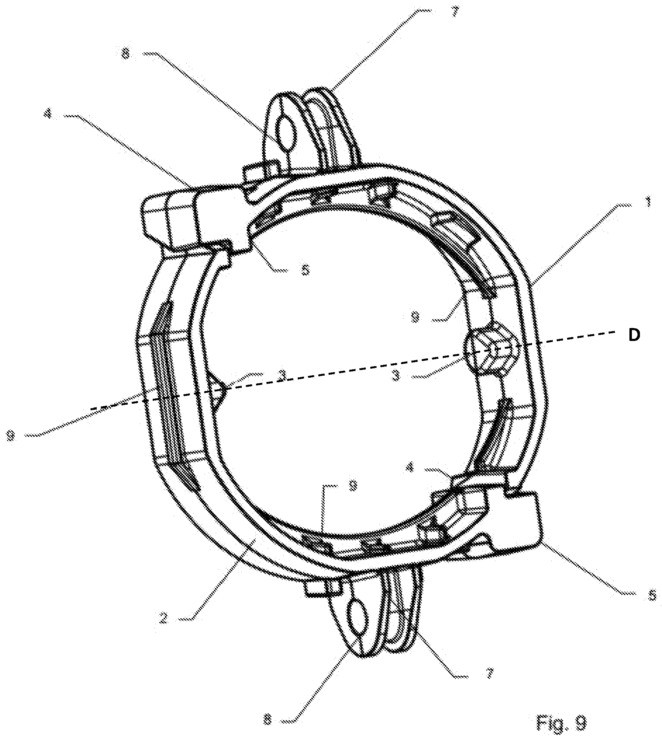

Figure 9 shows an alternative embodiment of the ring as shown in figure 3, wherein the respective hatches 4 and receiving slots 5 of the ring sections 1, 2 are free of bores for receiving a securing bolt, and the ring sections 1, 2 in the composed state are secured by gluing the hatches 4 in the corresponding receiving slots 5.

## Claims

1. Coupling arrangement (10) for coupling a cylindrical first conduit section (11) with a cylindrical second conduit section (12), wherein the coupling arrangement (10) comprises the first conduit section (11), a pair opposite receiving ribs (14) that extend radially outwards from the first conduit section (11) and that are circumferentially closed, and a ring (1, 2) that is to be mounted around the first conduit section, which ring (1, 2) at a pair of opposite locations comprises a pedestal (8) for the attachment thereto of a clamping organ (15, 16) that cooperates with the second conduit section (12), wherein the ring (1, 2) is composed of two composable ring sections (1, 2) **characterized in that** the ring comprises a pair of opposite cams (3) that extend radially inwards with respect to the ring (1, 2) to be received in the respective receiving ribs (14), wherein the respective cams (3) with the respective receiving ribs (14) form respective opposite pivot points between the first conduit section (11) and the ring (1, 2), wherein the ring sections (1, 2) each comprise one cam (3), wherein each cam (3), prior to composing the ring (1, 2), is independently receivable in a respective receiving rib (14) on the first conduit section (11), and wherein the ring (1, 2) is composable by rotating the respective ring sections (1, 2) around the respective pivot points (14).

2. Coupling arrangement (10) according to claim 1, wherein the ring sections (1, 2) are each at a first end provided with a latch (4) that tangentially extends with respect to the respective pivot point (3, 14) and are at a second end provided with a receiving slot (5) that tangentially extends with respect to the respective pivot point (3, 14), wherein the latch (4) of a first ring section (1) by a rotation of that ring section around a first pivot point (3, 14) is receivable in the receiving slot (5) of a second ring section (2), and simultaneously the latch (4) of the second ring section (2) by a rotation of that ring section around a second pivot point (14) is receivable in the receiving slot (5) of the first ring section (1).

3. Coupling arrangement (10) according to claim 2, wherein the ring sections (1, 2) comprise securing means (6, 13) for securing in a state wherein the latch (4) of the first (1) respectively the second ring section (2) is received in the receiving slot (5) of the second (2) respectively the first ring section (1).

4. Coupling arrangement (10) according to claim 2, wherein the ring sections (1, 2) by gluing are securable in a state wherein the latch (4) of the first (1) respectively the second ring section (2) is received in the receiving slot (5) of the second (2) respectively the first ring section (1).

5. Coupling arrangement (10) according to any one of the preceding claims, wherein the composable ring sections (1, 2) are identical.

6. Coupling arrangement (10) according to any one of the preceding claims, wherein the composable ring sections (1, 2) are manufactured according to an injection molding process.

7. Coupling arrangement (10) according to any one of the preceding claims, wherein the composable ring sections (1, 2) are manufactured from aluminum.

8. Coupling arrangement (10) according to any one of the claims 1-6, wherein the composable ring sections (1, 2) are manufactured from a plastic material.

9. Coupling arrangement (10) according to any one of the claims 1-5, wherein the composable ring sections (1, 2) are manufactured from cast steel.

10. Coupling arrangement (10) according to any one of the claims 1-5, wherein the composable ring sections (1, 2) are manufactured according to a method for 3D printing.

11. Coupling arrangement (10) according to any one of the preceding claims, further comprising at least one clamping organ composed of a clamping member (15) configured to cooperate with the second conduit section (2), and an operating lever (16) .

12. Coupling arrangement (10) according to any one of the preceding claims, wherein the cam (3) in a cross-section has a longitudinal circumference with an arch-shaped first short side and an opposite wedge-shape.

## Patentansprüche

1. Kupplungsanordnung (10) zum Verbinden eines zylindrischen ersten Leitungsabschnitts (11) mit einem zylindrischen zweiten Leitungsabschnitt (12), wobei die Kupplungsanordnung (10) den ersten Leitungsabschnitt (11), ein Paar gegenüberliegender Aufnahmerippen (14), die sich von dem ersten Leitungsabschnitt (11) radial nach außen erstrecken und die umlaufend geschlossen sind, und einen Ring (1, 2), der um den ersten Leitungsabschnitt herum zu montieren ist, umfasst, wobei der Ring (1, 2) an einem Paar gegenüberliegender Stellen einen Ansatz (8) umfasst, um daran ein Klemmorgan (15, 16) anzubringen, das mit dem zweiten Leitungsabschnitt (12) zusammenwirkt, wobei der Ring (1, 2) aus zwei zusammensetzbaren Ringabschnitten (1, 2) besteht, **dadurch gekennzeichnet, dass** der Ring ein Paar gegenüberliegender Nocken (3) umfasst, die sich in Bezug auf den Ring (1, 2) radial nach innen erstrecken, um in den jeweiligen Aufnahmerippen (14) aufgenommen zu werden, wobei die jeweiligen Nocken (3) mit den jeweiligen Aufnahmerippen (14) jeweilige gegenüberliegende Schwenkpunkte zwischen dem ersten Leitungsabschnitt (11) und dem Ring (1, 2) bilden, wobei die Ringabschnitte (1, 2) jeweils einen Nocken (3) umfassen, wobei jeder Nocken (3) vor einem Zusammensetzen des Rings (1, 2) unabhängig in einer jeweiligen Aufnahmerippe (14) auf dem ersten Leitungsabschnitt (11) aufnehmbar ist, und wobei der Ring (1, 2) durch Drehen der jeweiligen Ringabschnitte (1, 2) um die jeweiligen Schwenkpunkte (14) zusammensetzbar ist.

2. Kupplungsanordnung (10) nach Anspruch 1, wobei die Ringabschnitte (1, 2) jeweils an einem ersten Ende mit einer Verriegelung (4) versehen sind, die sich tangential in Bezug auf den jeweiligen Schwenkpunkt (3, 14) erstreckt, und an einem zweiten Ende mit einem Aufnahmeschlitz (5) versehen sind, der sich tangential in Bezug auf den jeweiligen Schwenkpunkt (3, 14) erstreckt, wobei die Verriegelung (4) eines ersten Ringabschnitts (1) durch eine Drehung dieses Ringabschnitts um einen ersten Schwenkpunkt (3, 14) in dem Aufnahmeschlitz (5) eines zweiten Ringabschnitts (2) aufnehmbar ist, und gleichzeitig die Verriegelung (4) des zweiten Ringabschnitts (2) durch eine Drehung dieses Ringabschnitts um einen zweiten Schwenkpunkt (14) in dem Aufnahmeschlitz (5) des ersten Ringabschnitts (1) aufnehmbar ist.

3. Kupplungsanordnung (10) nach Anspruch 2, wobei die Ringabschnitte (1, 2) Befestigungsmittel (6, 13) zum Befestigen in einem Zustand umfassen, in dem die Verriegelung (4) des ersten (1) bzw. des zweiten Ringabschnitts (2) in dem Aufnahmeschlitz (5) des zweiten (2) bzw. des ersten Ringabschnitts (1) aufgenommen ist.

4. Kupplungsanordnung (10) nach Anspruch 2, wobei die Ringabschnitte (1, 2) durch Verkleben in einem Zustand befestigbar sind, in dem die Verriegelung (4) des ersten (1) bzw. des zweiten Ringabschnitts (2) in dem Aufnahmeschlitz (5) des zweiten (2) bzw. des ersten Ringabschnitts (1) aufgenommen ist.

5. Kupplungsanordnung (10) nach einem der vorhergehenden Ansprüche, wobei die zusammensetzbaren Ringabschnitte (1, 2) identisch sind.

6. Kupplungsanordnung (10) nach einem der vorhergehenden Ansprüche, wobei die zusammensetzbaren Ringabschnitte (1, 2) gemäß einem Spritzgießprozess hergestellt sind.

7. Kupplungsanordnung (10) nach einem der vorhergehenden Ansprüche, wobei die zusammensetzbaren Ringabschnitte (1, 2) aus Aluminium hergestellt sind.

8. Kupplungsanordnung (10) nach einem der Ansprüche 1-6, wobei die zusammensetzbaren Ringabschnitte (1, 2) aus einem Kunststoffmaterial hergestellt sind.

9. Kupplungsanordnung (10) nach einem der Ansprüche 1-5, wobei die zusammensetzbaren Ringabschnitte (1, 2) aus Gussstahl hergestellt sind.

10. Kupplungsanordnung (10) nach einem der Ansprüche 1-5, wobei die zusammensetzbaren Ringabschnitte (1, 2) nach einem Verfahren zum 3D-Drucken hergestellt sind.

11. Kupplungsanordnung (10) nach einem der vorhergehenden Ansprüche, ferner umfassend mindestens ein Klemmorgan, das aus einem Klemmelement (15), das eingerichtet ist, um mit dem zweiten Leitungsabschnitt (2) zusammenzuwirken, und einem Betätigungshebel (16) besteht.

12. Kupplungsanordnung (10) nach einem der vorhergehenden Ansprüche, wobei der Nocken (3) in einem Querschnitt einen Längsumfang mit einer bogenförmigen ersten kurzen Seite und einer gegenüberliegenden Keilform aufweist.

## Revendications

1. Agencement de couplage (10) pour coupler une première section de conduit cylindrique (11) avec une deuxième section de conduit cylindrique (12), dans lequel l'agencement de couplage (10) comprend la première section de conduit (11), une paire de nervures de réception (14) opposées qui s'étendent radialement vers l'extérieur à partir de la première section de conduit (11) et qui sont circonférentiellement fermées, et un anneau (1, 2) qui doit être monté autour de la première section de conduit, ledit anneau (1, 2) au niveau d'une paire d'emplacements opposés comprend un socle (8) pour la fixation à celui-ci d'un organe de serrage (15, 16) qui coopère avec la deuxième section de conduit (12), dans lequel l'anneau (1, 2) est composé de deux sections d'anneau (1, 2) composables, **caractérisé en ce que** l'anneau comprend une paire de cames (3) opposées qui s'étendent radialement vers l'intérieur par rapport à l'anneau (1, 2) pour être reçues dans les nervures de réception (14) respectives, dans lequel les cames (3) respectives avec les nervures de réception (14) respectives forment des points de pivotement opposés respectifs entre la première section de conduit (11) et l'anneau (1, 2), dans lequel les sections d'anneau (1, 2) comprennent chacune une came (3), dans lequel chaque came (3), avant de composer l'anneau (1, 2), peut être reçue indépendamment dans une nervure de réception (14) respective sur la première section de conduit (11), et dans lequel l'anneau (1, 2) est composable par la rotation des sections d'anneau (1, 2) respectives autour des points de pivotement (14) respectifs.

2. Agencement de couplage (10) selon la revendication 1, dans lequel les sections d'anneau (1, 2) sont chacune, au niveau d'une première extrémité, dotées d'un verrou (4) qui s'étend tangentiellement par rapport au point de pivotement (3, 14) respectif et sont, au niveau d'une deuxième extrémité, dotées d'une fente de réception (5) qui s'étend tangentiellement par rapport au point de pivotement (3, 14) respectif, dans lequel le verrou (4) d'une première section d'anneau (1), par une rotation de cette section d'anneau autour d'un premier point de pivotement (3, 14), peut être reçu dans la fente de réception (5) d'une deuxième section d'anneau (2), et simultanément le verrou (4) de la deuxième section d'anneau (2), par une rotation de cette section d'anneau autour d'un deuxième point de pivotement (14), peut être reçu dans la fente de réception (5) de la première section d'anneau (1).

3. Agencement de couplage (10) selon la revendication 2, dans lequel les sections d'anneau (1, 2) comprennent des moyens de fixation (6, 13) pour une fixation dans un état dans lequel le verrou (4) de la première section d'anneau (1), respectivement de la deuxième section d'anneau (2), est reçu dans la fente de réception (5) de la deuxième section d'anneau (2), respectivement de la première section d'anneau (1).

4. Agencement de couplage (10) selon la revendication 2, dans lequel les sections d'anneau (1, 2), par collage, peuvent être fixées dans un état dans lequel le verrou (4) de la première section d'anneau (1), respectivement de la deuxième section d'anneau (2), est reçu dans la fente de réception (5) de la deuxième section d'anneau (2), respectivement de la première section d'anneau (1).

5. Agencement de couplage (10) selon l'une quelconque des revendications précédentes, dans lequel les sections d'anneau (1, 2) composables sont identiques.

6. Agencement de couplage (10) selon l'une quelconque des revendications précédentes, dans lequel les sections d'anneau (1, 2) composables sont fabriquées selon un processus de moulage par injection.

7. Agencement de couplage (10) selon l'une quelconque des revendications précédentes, dans lequel les sections d'anneau (1, 2) composables sont fabriquées en aluminium.

8. Agencement de couplage (10) selon l'une quelconque des revendications 1 à 6, dans lequel les sections d'anneau (1, 2) composables sont fabriquées en matière plastique.

9. Agencement de couplage (10) selon l'une quelconque des revendications 1 à 5, dans lequel les sections d'anneau (1, 2) composables sont fabriquées en acier moulé.

10. Agencement de couplage (10) selon l'une quelconque des revendications 1 à 5, dans lequel les sections d'anneau (1, 2) composables sont fabriquées selon un procédé d'impression 3D.

11. Agencement de couplage (10) selon l'une quelconque des revendications précédentes, comprenant en outre au moins un organe de serrage composé d'un élément de serrage (15) configuré pour coopérer avec la deuxième section de conduit (2), et d'un levier de commande (16).

12. Agencement de couplage (10) selon l'une quelconque des revendications précédentes, dans lequel la came (3) en coupe transversale présente une circonférence longitudinale avec un premier côté court arqué et une forme de coin opposée.
